(19) Europäisches Patentamt
European Patent Office
Office européen des brevets

(11) **EP 1 845 731 B1**

(12) **EUROPEAN PATENT SPECIFICATION**

(45) Date of publication and mention
of the grant of the patent:
**24.12.2008 Bulletin 2008/52**

(51) Int Cl.:
***H04N 7/26*** (2006.01)

(21) Application number: **06300362.8**

(22) Date of filing: **13.04.2006**

(54) **Method and apparatus for determining a threshold for SKIP mode in video coding**

Verfahren und Vorrichtung zum Bestimmen eines Grenzwertes eines SKIP-Modes in Videokodierung

Procédé et dispositif de détermination d'une valeur limite pour de SKIP-Mode dans le codage vidéo

(84) Designated Contracting States:
**DE FR GB**

(43) Date of publication of application:
**17.10.2007 Bulletin 2007/42**

(73) Proprietor: **Thomson Licensing**
**92100 Boulogne-Billancourt (FR)**

(72) Inventors:
• **Zhu, Li Hua**
**8F, Bldg. A, Technology Fortune Center**
**100085 Beijing (CN)**
• **Yin, Peng**
**West Windsor, NJ 08550 (US)**

• **Wang, Charles**
**Rm 03-09, 8F, Building A**
**Hai Dian District**
**100085 Beijing (CN)**

(74) Representative: **Rittner, Karsten**
**Deutsche Thomson OHG**
**European Patent Operations**
**Karl-Wiechert-Allee 74**
**30625 Hannover (DE)**

(56) References cited:
**EP-A- 1 349 395**          **US-A- 5 737 537**
**US-B1- 6 721 359**

**Description**

Field of the invention

This invention relates to a method and an apparatus for encoding pictures. In particular, the method and apparatus ease the determining of whether or not to use Skip mode for encoding macroblocks.

Background

Numerous multimedia technologies have been developed for the various media products such as VCD, DVD and video conference. Multimedia standards are the core technology of these products. International standards such as MPEG and H.26x play a very important role in practical applications.

The objective of video compression is to reduce the redundancy of the temporal and spatial dimension. Known standards generally use hybrid coding for this purpose. E.g. motion estimation (ME) reduces the temporal redundancy while spatial prediction, Discrete Cosine Transform (DCT), quantization and entropy coding reduce the spatial redundancy.

A frame in a video sequence is generally divided into many 16X16 macroblocks (MB). For MPEG-4 Part 10/AVC, the MBs may be further divided into 16X8, 8X16, 8X8, 4X8, 8X4 and 4X4 pixel blocks. Most of the algorithms such as ME, DCT, quantization and entropy coding are done on these MBs or blocks. In some cases, the residual values of some MBs or blocks are so small that they can all be quantized to zero during the quantization. These MBs can be skipped during encoding. Skipping of MBs or blocks plays a key role when reducing the codec complexity and data rate. A problem is how to find these MBs as efficiently as possible.

To identify MBs that can be skipped, one known method is to calculate a parameter from the MB and compare it with a predetermined threshold. However, known methods for determining such threshold shorten the time of computation only in the DCT domain by combining quantization and DCT together. This is done after ME.

Summary of the Invention

Since the known algorithms combine quantization and DCT together to identify MBs that can be skipped, they only shorten the computation for DCT and quantization, but not for ME. It would be advantageous to improve the threshold predetermination in order to further reduce the calculation complexity. This can be done by finding a threshold that can be applied before ME. But because of the quantization noise, it is very difficult to find a good threshold that is usable for ME.

The present invention is different from the traditional algorithms for determining skip MBs or blocks, since it combines the ME, DCT and quantization together. Thus, it not only obtains the effect of traditional algorithms, but also shortens the time used for ME, which is a very efficient way to reduce the computation complexity. In addition, the invention adds the modified threshold to correct the fault predetermination to satisfy different quality requirements.

One aspect of the invention is to statistically analyze the distribution of quantization errors, and then generate and use different thresholds for different properties of a video sequence. Advantageously, this enables to determine earlier (ie. with less effort) than known methods whether or not the encoding (including motion estimation, DCT and quantization) of a MB can be skipped.

The main idea is to get a difference value, preferably a sum-of-absolute-differences (SAD) value, that can be used as threshold for determining on MB level if ME is needed or not. Then an actual SAD value is calculated for each MB of a picture (compared with a previous picture), and if the actual SAD value is below the threshold, motion is assumed to be zero and motion estimation can be skipped. Moreover, the DCT and quantization can also be skipped for this MB. Usually it is sufficient to consider only luminance MBs (16x16 pixels) .

The invention uses the original and reconstructed version of the same picture to gather the statistical information for determining a threshold for deciding whether to skip the encoding and transmission of MBs. The original and reconstructed versions of a picture differ in that the reconstructed picture is distorted with quantization noise.

According to the invention, the threshold value can be obtained by a statistical method, as explained below.

According to one aspect of the invention, a method for determining a threshold for deciding in video coding whether motion estimation, DCT and quantization may be skipped on macroblock level comprises the steps of determining a quantization parameter,
quantizing and inverse quantizing a picture on macroblock level, wherein the determined quantization parameter is used and a reconstructed picture is obtained,
calculating a difference between the picture and the reconstructed picture,
calculating the mean and standard deviation of differences between the current and reconstructed picture,
calculating a threshold using the mean and standard deviation to determine a statistical confidence interval, and storing the threshold value associated with the quantization parameter.

The method can be further specified in that the statistical confidence interval is determined according to

$$SAD_{Threshold,QP} = m_{SAD} + 3\sigma_{SAD} .$$

The method can be further specified in that the mean and standard deviation of a picture are calculated from the mean ($m_0$) and standard deviation ($\sigma_0$) of the macroblocks of a picture according to $m_{SAD} = n * m_0$ and $\sigma_{SAD} = n * \sigma_0$ , wherein n is the number of macroblocks per picture. According to the Large Number Law and Central Limit Theorem, $m_0$ can be taken as the mean of all pixels in a macroblock.

The method can be further specified in that the threshold value is valid for luminance macroblocks, wherein a threshold value for chrominance macroblocks is calculated by multiplication with a constant factor according to

$$SAD_{Threshold,QP,chrominance} = c * SAD_{Threshold,QP,luminance}$$

The method can be further specified in that the constant factor is substantively 0.7 (or 70%) .

The method can be further specified in that separate tables of threshold values are used for different amounts of motion within a sequence, e.g. low motion, medium motion and high motion sequences.

The method can be further specified in that a selected table of threshold values is valid for a group-of-pictures (GOP), and a new table is selected for each GOP.

According to one aspect of the invention, a method for encoding pictures on macroblock level, wherein quantization with a defined quantization parameter is used, comprises the steps of

determining for different quantization parameters respective thresholds, wherein a threshold is obtained by statistical analysis of the differences between a reference picture and a reconstructed picture,

calculating for each macroblock of a current picture a difference value by comparing it with a corresponding macroblock of a previous picture,

determining a quantization parameter to be used,

comparing the difference value with the threshold corresponding to the determined quantization parameter, and

skipping at least motion estimation/compensation for the macroblock if said difference value is below the threshold for the determined quantization parameter.

According to one aspect of the invention, an apparatus for determining a threshold for deciding in video coding whether motion estimation, DCT and quantization may be skipped on macroblock level, comprises

means for determining a quantization parameter,

means for quantizing and inverse quantizing a picture on macroblock level, wherein the determined quantization parameter is used and a reconstructed picture is obtained, means for calculating a difference between the picture and the reconstructed picture,

means for calculating the mean and standard deviation of differences between the current and reconstructed picture,

means for calculating a threshold using the mean and

standard deviation to determine a statistical confidence interval, and

means for storing the threshold value associated with the quantization parameter, and optionally also associated with an indication of the amount of motion (low/medium/high).

According to one aspect of the invention, an apparatus for encoding pictures on macroblock level, wherein quantization with a defined quantization parameter is used, comprises means for determining for different quantization parameters respective thresholds, wherein a threshold is obtained by statistical analysis of the differences between a reference picture and a reconstructed picture,

means for calculating for each macroblock of a current picture a difference value by comparing it with a corresponding macroblock of a previous picture,

means for determining a quantization parameter to be used, means for comparing the difference value with the threshold corresponding to the determined quantization parameter, and

means for skipping motion estimation (and encoding) of the macroblock if said difference value is below the threshold for the determined quantization parameter. Encoding is

skipped insofar as an indication for "skip MB" may be generated and transmitted, but motion compensation, DCT and quantization need not be performed.

The invention makes use of the Central Limit Theorem, which states that data which are influenced by many small and unrelated random effects are approximately normally distributed. This idea is applied to quantization errors.

In one embodiment of the invention, the following steps are performed for obtaining the threshold:

selecting a quantization parameter (QP),

comparing the MBs of a reconstructed picture (ie. quantized and inverse quantized) with the same MB of the original picture (without motion),

calculating among the 256 pixel differences of a MB the mean ($m_0$) and the standard deviation ($\sigma_0$),

calculating the SAD (a sum of 256 values if the MB has 16x16 pixels) for the MB by comparing each pixel with the corresponding pixel of the same MB of the original picture (without motion) and adding the differences,

calculating over all SADs of a picture the mean ($m_{SAD}$) and standard deviation ($\sigma_{SAD}$) on MB level (which can be done by adding up the $m_0$ and $\sigma_0$ of all MBs),

and repeating all previous steps for different quantization parameters (QP); depending on the used QP, $m_{SAD}$ and $\sigma_{SAD}$ are different.

The obtained values for $m_{SAD}$ and $\sigma_{SAD}$ can be used to adjust the threshold for determining Skip MBs adaptively depending on the used QP: If the following equation is fulfilled with a particular QP, then ME, DCT and quantization are skipped:

$$SAD_{Threshold} < m_{SAD} + 3\sigma_{SAD}$$

Thus, the obtained threshold (or $m_{SAD}$ and $\sigma_{SAD}$) values and the respective QP can be stored in a table that can be used for looking-up the threshold for a given QP.

Advantageously, the obtained threshold value can be used for the MBs from a plurality of pictures, e.g. the pictures of a GOP (group-of-pictures).

One aspect of the invention is how to determine the limit for skipping according to SAD, namely by using a non-linear relation between the threshold and the QP, and adaptively adjusting the threshold according to the used QP.

Advantageous embodiments of the invention are disclosed in the dependent claims, the following description and the figures.

Brief description of the drawings

Exemplary embodiments of the invention are described with reference to the accompanying drawings, which show in

Fig.1 various reconstructed pictures with different quantization parameters that are compared with a reference picture;

Fig.2 the residue of the current and original reference frame;

Fig.3 the residue of the original reference frame and reconstructed reference frame;

Fig.4 the residue of the current and reconstructed reference frame; and

Fig.5 the absolute residue of the current and reconstructed reference frame.

Detailed description of the invention

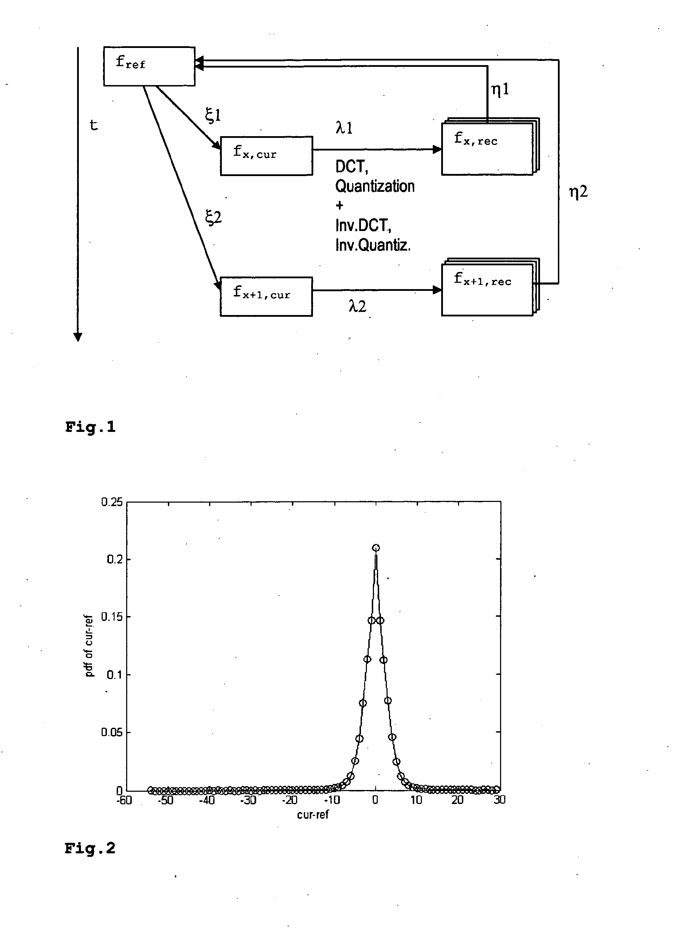

Fig.1 shows the general processing, where various current pictures $f_{x,cur}$, $f_{x+1,cur}$ are quantized/inverse quantized with different quantization parameters, and reconstructed pictures $f_{x,rec}$, $f_{x+1,rec}$ are obtained that are compared with a reference picture $f_{ref}$. The difference between reference picture and a current picture is $\xi1,\xi2$, the difference between current and reconstructed picture is $\lambda1,\lambda2$ and the difference between reconstructed and reference picture is $\eta1,\eta2$.

First, an analysis of motion estimation (ME) is given. The objective of ME is to remove the temporal redundancy. To fasten the computation, a sum of absolute differences (SAD) takes the place of mean absolute differences (MAD). The present invention uses the property of SAD to reduce the computation.

An analysis of the SAD threshold is given next.

Because of the quantization noise, it is very difficult to be accurate in finding the best SAD in the ME. Assuming $f_{cur(i,j)}$ as the current frame, $f_{ref(i,j)}$ as the original reference frame and $f_{rec(i,j)}$ as the reconstructed reference frame (where i,j are indices of pixels within a picture), defining $\xi_{ij}=f_{cur(i,j)}-f_{ref(i,j)}$ and $\eta_{ij}=f_{ref(i,j)}-f_{rec(i,j)}$, and assuming that there is (almost) no movement in the frame sequence (which is very similar to the definition in the optical flow theorem), the $\xi$ should be approximately zero (padding in the edge not considered). According to the definition of DCT and inverse DCT (IDCT) the following is established:

$$f_{ref}(x,y) = \sum_{u=0}^{M-1} \sum_{v=0}^{N-1} C_{ref}(u,v)\cos\left(\frac{2x+1}{2M}u\pi\right)\cos\left(\frac{2y+1}{2N}v\pi\right) \qquad (eq.1)$$

$$f_{rec}(x,y) = \sum_{u=0}^{M-1} \sum_{v=0}^{N-1} C_{rec}(u,v)\cos\left(\frac{2x+1}{2M}u\pi\right)\cos\left(\frac{2y+1}{2N}v\pi\right) \qquad (eq.2)$$

So, $\eta$ can be written as

$$\eta(x,y) = \sum_{u=0}^{M-1} \sum_{v=0}^{N-1} \left(C_{ref}(u,v)-C_{rec}(u,v)\right)\cos\left(\frac{2x+1}{2M}u\pi\right)\cos\left(\frac{2y+1}{2N}v\pi\right) \qquad (eq.3)$$

Let $e(u,v) = C_{ref}(u,v) - C_{rec}(u,v)$. According to the property of MPEG-4 quantization, the distribution of $e(u,v)$ is a uniform distribution which has constant probability density on an interval $[0, Q-1]$, where Q is the quantization parameter.

$\eta(x,y)$ is a random variable, m is its mean or average, and $\sigma$ is its standard deviation. Assuming $\lambda=\xi+\eta$ as the sum of random variables, then $\xi$ should ideally approach zero, i.e. $\xi=0$. According to the definition of SAD (sum of absolute differences), the SAD of a luminance macroblock is

$$SAD = \sum_{x=0}^{15} \sum_{y=0}^{15} \left|\lambda(x,y)\right|.$$

Assume $m_0$ and $\sigma_0$ are separately the mean and standard deviation of $|\lambda|$, where $|\lambda|$ is the difference between the reconstructed reference frame and original frame. Thus, it can be assumed that the distribution among different $|\lambda|$ is statistically independent.

The Central Limit Theorem states that data which are influenced by many small and unrelated random effects are approximately normally distributed, or: if the sum of the variables has a finite variance, it will be approximately normally distributed. Since many real processes yield distributions with finite variance, the normal distribution is ubiquitous.

Since the Central Limit theorem states that the sample mean of independent random variables should follow a normal distribution, the SAD should follow the **[256$m_0$,16$\sigma_0$]** normal distribution, with the mean of **256$m_0$** and standard deviation of **16$\sigma_0$**.

$$m_{SAD} = 256m_0 \qquad \sigma_{SAD} = 16\sigma_0 \qquad (eq.4)$$

where $m_{SAD}$ and $\sigma_{SAD}$ are respectively the mean and standard deviation of SAD.

For different quantization parameters, the mean **256$m_0$** and standard deviation **16$\sigma_0$** are different.

Thus, it is possible to use what is called "confidence interval" in mathematical statistics:

$$[\ m_{SAD}-3\sigma_{SAD}\ ,\ m_{SAD}+3\sigma_{SAD}\ ]\ >\ 99\% \qquad (eq.5)$$

This means that at least 99% of the SAD values of the MBs are within the confidence interval $[m_{SAD} \pm 3\sigma_{SAD}]$. According to this property, we set the threshold to

$$SAD_{Threshold} = m_{SAD} + 3\sigma_{SAD} \qquad\qquad (eq.6)$$

where $m_{SAD}$ and $3\sigma_{SAD}$ is from equation (eq. 4).

It is also possible to only gather $m_0$ and $\sigma_0$ for each MB in a frame, and sum them together to get the average of them. In addition, to simplify the algorithm complexity, it is sufficient to only gather information of the quantization parameter dependent threshold $SAD_{Threshold}$, and compare each SAD to $SAD_{Threshold}$ instead of comparing it to $m_{SAD} + 3\sigma_{SAD}$. The $SAD_{Threshold}$ can be produced in advance corresponding to the QP. As one embodiment of the invention, a table can be built with different $SAD_{Threshold}$ values corresponding to different QPs. The statistical properties of several (eg.300) frames can be watched in experiments to get a $SAD_{Threshold}$ table in advance, which can simplify the comparison of $SAD_{MB}$ for a particular MB with $SAD_{Threshold}$.

In one embodiment, the above steps need not be done for each frame; they can be done once for a GOP, particularly if all the frames can be assumed to have same properties. In addition, (at least) for MPEG-4 Part2 not only motion estimation but also DCT and quantization can be skipped.

From the Interval Estimation Theorem and property of normal distribution, when two luminance MBs coming from the original frame and the reconstructed reference frame respectively match exactly (ie. there is no movement between two luminance MBs), then at least 99% of the SAD values are in the confidence interval $[m_{SAD}-3\sigma_{SAD}, m_{SAD}+3\sigma_{SAD}]$ given in (eq.5).

In practice, the absolute residue $|f_{cur} -f_{rec}|$ can be used to compute the SAD. Thus, it can be derived that the two luminance MBs match exactly (ie. no motion estimation is necessary) if the SAD is below the threshold given in equation (eq.6).

With the definition above, a standard low motion sequence (*"hall monitor"*), which has 300 frames and a resolution of 352x288 pixels, is used as exemplary sequence to estimate the threshold of the ending SAD; the quantization parameter Q is set to 4.

First, the residue $(f_{cur} - f_{ref})$ between the current frame $f_{cur}$ and original reference frame $f_{ref}$ is computed. Its largest mean is 0.0162 and largest standard deviation is 3.0494 for the total 300 frames. The distribution of the residue $(f_{cur} - f_{ref})$ is shown in Fig.2.

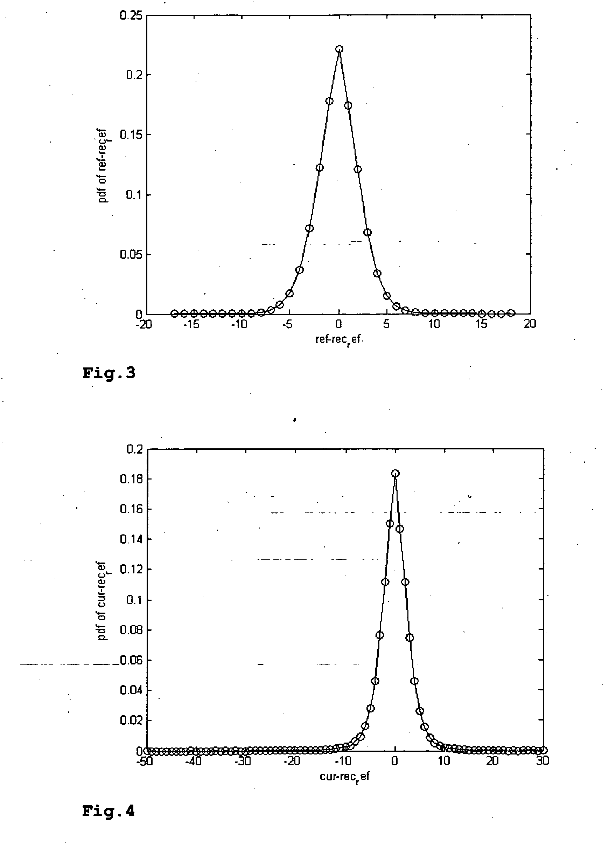

Second, the residue $(f_{ref} - f_{rec})$ between the original reference frame $f_{ref}$ and reconstructed reference frame $f_{rec}$ is computed. Its largest mean is -0.054 and largest standard deviation is 2.2735 for the total 300 frames. The distribution of the residue $(f_{ref} - f_{rec})$ is shown in Fig.3.

Third, the residue $(f_{cur} - f_{rec})$ between the current frame $f_{cur}$ and reconstructed reference frame $f_{rec}$ is computed. Its largest mean is -0.0378 and largest standard deviation is 3.2732 for all the 300 frames. The distribution of the residue $(f_{cur} -f_{rec})$ is shown in Fig.4.

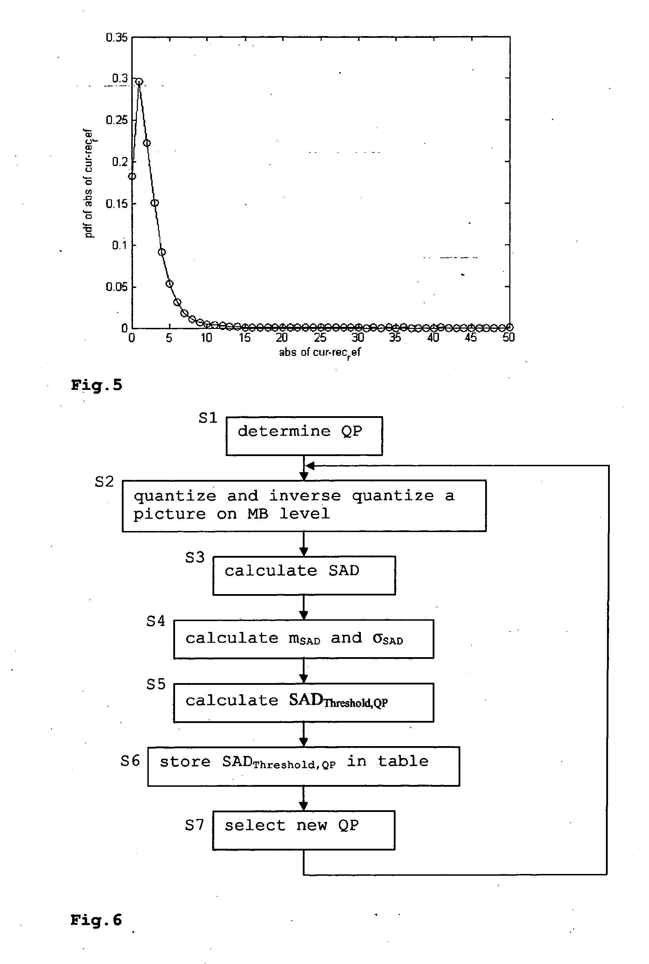

Finally, the absolute residue $|f_{cur} -f_{rec}|$ between the current frame $f_{cur}$ and reconstructed reference frame $f_{rec}$ is computed. Its largest mean is 2.3192 and largest standard deviation is 2.3078 for all the frames. The distribution of the absolute residue $|f_{cur} -f_{rec}|$ is shown in Fig.5.

According to equation (eq. 4), $m_{SAD}$ is 593.7152 and $\sigma_{SAD}$ is 36.9392 when the quantization parameter is four.

For the MPEG-4 codec, the different SAD thresholds for a low motion sequence are shown in Tab.1, with quantization parameter varying from 1 to 32. Different thresholds of SAD for different sequences can be derived. For different applications, such as low motion and high motion, different threshold tables can be found mapping to different QPs. According to these tables, it is possible to determine whether a current MB is a Skip MB or not. For Skip MBs, the current ME can be terminated and motion compensation, DCT and quantization can be skipped.

The following embodiment describes how to correct the threshold of chrominance SADs.

Under a few conditions, the fidelity degradation is visible and manifests itself as chrominance changes, while no distortion appears in the luminance. This is because Skip blocks are predicted solely on luminance values, which may be an inaccurate indicator for chrominance blocks. In one embodiment of the invention, the threshold of SAD may also be corrected for the chrominance. In this case, first the SAD for chrominance is computed, and then (in principle) the above method is used to get the threshold for chrominance SAD.

It is also possible to deduce the threshold of chrominance SAD from the threshold of luminance SAD. Generally, a factor of 0.7 can be used (the value may vary, eg.by +10%). Thus, the threshold of luminance SAD is multiplied with 0.7 and the result is the threshold for chrominance SAD.

Exemplarily, several video sequences were tested which have the property varying from low motion to high motion at the MPEG-4 main profile (no B-frames). The CPU frequency is 1.8GHZ and memory size 256Mb. Three sequences were tested separately, with low motion, medium motion and high motion respectively. Peak-Signal-to-Noise-Ratio (PSNR) and encoding speed were compared with conventional coding. The results are shown in Tabs.4-5 for PSNR and Tabs.6-7 for encoding speed (number of frames per second), where the first column is tested without the threshold of SAD and the second column is tested with the threshold of SAD according to Tabs.1-3 as obtained by the above-described method.

Tab. 1

| QP | Threshold for luminance SAD (low motion) |
|---|---|
| 0-9 | 0, 700, 663, 695, 704, 746, 777, 826, 863, 915 |
| 10-19 | 953, 997, 1040, 1083, 1123, 1168, 1206, 1250, 1280, 1330 |
| 20-29 | 1372, 1413, 1455, 1495, 1528, 1574, 1608, 1642, 1671, 1713 |
| 30-31 | 1746, 1787 |

Exemplarily, Tab.1 shows the threshold of luminance SAD for a low motion sequence ("students") for the different possible quantization parameters QP of 0-31 (QP are meant as an index) .

Tab.2

| QP | Threshold for luminance SAD (medium motion) |
|---|---|
| 0-9 | 0, 656, 603, 643, 647, 721, 735, 768, 787, 812 |
| 10-19 | 823, 890, 913, 947, 962, 979, 1042, 1107, 1174, 1206 |
| 20-29 | 1276, 1285, 1317, 1362, 1404, 1436, 1476, 1531, 1576, 1603 |
| 30-31 | 1672,1726 |

Exemplarily, Tab.2 shows the threshold of luminance SAD for a medium motion sequence ("foreman") for the different possible quantization parameters 0-31.

Tab.3

| QP | Threshold for luminance SAD (high motion) |
|---|---|
| 0-9 | 0, 502, 453, 497, 556, 639, 694, 735, 749, 769 |
| 10-19 | 783, 812, 823, 839, 863, 895, 905, 915, 972, 1013 |
| 20-29 | 1076, 1120, 1186, 1237, 1283, 1306, 1378, 1393, 1483, 1538 |
| 30-31 | 1594, 1683 |

Exemplarily, Tab.3 shows the threshold of luminance SAD for a high motion sequence ("football") for the different possible quantization parameters 0-31.

Tab.4

| | 300kbits | | 500kbits | | 800kbits | |
|---|---|---|---|---|---|---|
| high motion ("Football") | 30.048 | 30.049 | 31.932 | 31.932 | 32.843 | 32.839 |
| medium motion ("Foreman") | 33.124 | 32.125 | 34.588 | 34.586 | 35.144 | 35.141 |
| low motion ("Students") | 37.623 | 37.672 | 38.412 | 38.508 | 38.761 | 38.837 |

Tab.4 shows the PSNR with CIF resolution: encoding with threshold (1st column) and without threshold (2nd column) .

Tab.5

|  | 800kbits | | 1000kbits | | 1500kbits | |
|---|---|---|---|---|---|---|
| high motion ("Akaya") | 33.925 | 33.919 | 34.272 | 34.268 | 34.642 | 34.641 |
| medium motion ("Harp") | 35.412 | 35.417 | 35.871 | 35.874 | 36.098 | 36.100 |
| low motion ("Phone") | 36.233 | 36.241 | 36.432 | 36.501 | 36.872 | 36.874 |

Tab.5 shows the PSNR with D1 resolution: encoding with threshold (1st column) and without threshold (2nd column) .

Tab.6

|  | 300kbits | | 500kbits | | 800kbits | |
|---|---|---|---|---|---|---|
| Football | 221 | 304 | 201 | 300 | 197 | 293 |
| Foreman | 254 | 407 | 267 | 392 | 246 | 386 |
| Students | 356 | 600 | 347 | 596 | 341 | 576 |

Tab.6 shows the encoding speed with CIF resolution for encoding with threshold (1st column) and without threshold (2nd column) .

Tab. 7

|  | 800kbits | | 1000kbits | | 1500kbits | |
|---|---|---|---|---|---|---|
| Akaya | 95 | 143 | 89 | 140 | 88 | 136 |
| Harp | 106 | 164 | 98 | 149 | 94 | 147 |
| Phone | 112 | 167 | 110 | 155 | 107 | 143 |

Tab.7 shows the encoding speed with D1 resolution for encoding with threshold (1st column) and without threshold (2nd column) .

The three tables Tab.1-3 can be produced dynamically after encoding a scene in a sequence (scene means here continuous sequence of frames which have same properties; in practice, a GOP can be used as a scene). In practical applications, the motion in the sequence does not have to be estimated; the table can be obtained by the information of the previous 'scene'. But at the beginning of the sequence, the medium-motion table can generally be used as the threshold. It is only used for a GOP distance, and then the activity of the current sequence can be determined.

As shown in the examples, an advantageous effect of the invention is that the PSNR is generally higher when using the threshold than without the threshold, and the speed of encoding with the threshold is faster than without the threshold. This is particularly lucid for the low motion sequence.

One advantage of the invention is that the computation time, e.g. for the whole MPEG-4/Part2 structure, is shortened.

As a further advantage of the invention, the objective and subjective quality is improved, particularly for low motion sequences.

The invention can be applied to video codecs, in particular MPEG-4 Part2 codecs, but also MPEG-4/AVC codecs and others.

## Claims

1. Method for determining a threshold suitable for deciding in video coding whether motion estimation, DCT and quantization may be skipped on macroblock level, comprising the steps of

   - determining a quantization parameter;
   - quantizing and inverse quantizing ($\lambda 1$) a picture ($f_{x, cur}$) on macroblock level, wherein the determined quantization parameter is used and a reconstructed picture ($f_{x, rec}$) is obtained;
   - calculating a difference (SAD) between the picture ($f_{x, cur}$) and the reconstructed picture ($f_{x, rec}$);

- calculating the mean ($m_{SAD}$) and standard deviation ($\sigma_{SAD}$) of differences between the current and reconstructed picture;
- calculating a threshold ($SAD_{Threshold,QP}$) using the mean ($m_{SAD}$) and standard deviation ($\sigma_{SAD}$) to determine a statistical confidence interval, and
- storing the threshold value ($SAD_{Threshold, QP}$) associated with the quantization parameter.

2. Method according to claim 1, wherein the statistical confidence interval is determined according to $SAD_{Threshold, QP} = m_{SAD} + 3\sigma_{SAD}$.

3. Method according to claim 1 or 2, wherein the mean ($m_{SAD}$) and standard deviation ($\sigma_{SAD}$) of a picture are calculated from the mean ($m_0$) and standard deviation ($\sigma_0$) of the macroblocks of a picture according to $m_{SAD} = n * m_0$ and $\sigma_{SAD}$ $n * \sigma_0$, where n is the number of macroblocks per picture.

4. Method according to any of claims 1-3, wherein the threshold value is valid for luminance macroblocks, and wherein a threshold value for chrominance macroblocks is calculated by multiplication with a constant factor according to $SAD_{Threshold, QP, chrominance} = C * SAD_{Threshold, QP, luminance}$

5. Method according to claim 4, wherein the constant factor is $0.7 \pm 10\%$.

6. Method according to any of the previous claims, wherein separate tables of threshold values are used for slow motion, medium motion and high motion sequences.

7. Method according to any of the previous claims, wherein a new stable of threshold values is selected for each GOP.

8. A method for encoding pictures on macroblock level, wherein quantization with a predefined quantization parameter is used, comprising the steps of

- determining for different quantization parameters respective thresholds ($SAD_{Threshold,QP}$) according to any of the methods of the claims 1-7;
- calculating for each macroblock of a current picture a difference value (SAD) by comparing it with a corresponding macroblock of a previous picture;
- determining a quantization parameter (QP) to be used;
- comparing the difference value (SAD) with the threshold ($SAD_{Threshold, QP}$) corresponding to the determined quantization parameter (QP); and
- skipping motion estimation and encoding of the macroblock if said difference value (SAD) is below the threshold ($SAD_{Threshold, QP}$) for the determined quantization parameter.

9. Apparatus for determining a threshold suitable for deciding in video coding whether motion estimation, DCT and quantization may be skipped on macroblock level, comprising

- means for determining a quantization parameter;
- means for quantizing and inverse quantizing ($\lambda 1$) a picture ($f_{x, cur}$) on macroblock level, wherein the determined quantization parameter is used and a reconstructed picture ($f_{x, rec}$) is obtained;
- means for calculating a difference (SAD) between the picture ($f_{x, cur}$) and the reconstructed picture ($f_{x, rec}$) ;
- means for calculating the mean ($m_{SAD}$) and standard deviation, ($\sigma_{SAD}$) of differences between the current and reconstructed picture;
- means for calculating a threshold ($SAD_{Threshold, QP}$) using the mean ($m_{SAD}$) and standard deviation ($\sigma_{SAD}$) to determine a statistical confidence interval, and
- means for storing the threshold value ($SAD_{Threshold, QP}$) associated with the quantization parameter.

10. Apparatus for encoding pictures on macroblock level, wherein quantization with a predefined quantization parameter is used, comprising

- means for determining for different quantization parameters respective thresholds ($SAD_{Threshold, QP}$) according to any of the methods of the claims 1-7;
- means for calculating for each macroblock of a current picture a difference value (SAD) by comparing it with a corresponding macroblock of a previous picture;
- means for determining a quantization parameter (QP) to be used;

- means for comparing the difference value (SAD) with the threshold (SAD$_{Threshold, QP}$) corresponding to the determined quantization parameter (QP); and
- means for skipping motion estimation and encoding of the macroblock if said difference value (SAD) is below the threshold (SAD$_{Threshold, Qf}$) for the determined quantization parameter.

**Patentansprüche**

1. Verfahren zum Bestimmen eines Schwellwerts, der bei der Video-Kodierung für die Entscheidung geeignet ist, ob Bewegungsabschätzung, DCT und Quantisierung auf Makroblock-Ebene übersprungen werden können, umfassend die Schritte:

   - Bestimmen eines Quantisierungs-Parameters;
   - Quantisieren und inverses Quantisieren ($\lambda1$) eines Bildes (f$_{x, cur}$) auf Makroblock-Ebene, wobei der Quantisierungs-Parameter verwendet wird und ein rekonstruiertes Bild (f$_{x, rec}$) erhalten wird;
   - Berechnen einer Differenz (SAD) zwischen dem Bild (f$_{x, cur}$) und dem rekonstruierten Bild (f$_{x, rec}$) ;
   - Berechnen der mittleren (m$_{SAD}$) und der Standardabweichung ($\sigma_{SAD}$) der Differenz zwischen dem aktuellen und dem rekonstruierten Bild;
   - Berechnen eines Schwellwerts (SAD$_{Threshold, QP}$) unter Verwendung der mittleren (m$_{SAD}$) und der Standardabweichung ($\sigma_{SAD}$), um ein statisches Vertrauensintervall zu bestimmen; und
   - Speichern des dem Quantisierungs-Parameter zugeordneten Schwellwertes (SAD$_{Threshold, QP}$).

2. Verfahren nach Anspruch 1, bei dem das statistische Vertrauensintervall gemäß SAD$_{Threshold, QP}$ = m$_{SAD}$ + 3$\sigma_{SAD}$ bestimmt wird.

3. Verfahren nach Anspruch 1 oder 2, bei dem die mittlere (m$_{SAD}$) und die Standardabweichung ($\sigma_{SAD}$) eines Bildes aus der mittleren (m$_0$) und der Standardabweichung ($\sigma_0$) der Makroblöcke eines Bildes gemäß m$_{SAD}$ = n * m$_0$ und $\sigma_{SAD}$ = n * $\sigma_0$ berechnet werden, wobei n die Zahl von Makroblöcken pro Bild ist.

4. Verfahren nach einem der Ansprüche 1 bis 3, bei dem der Schwellwert für Luminanz-Makroblöcke gültig ist, und bei dem ein Schwellwert für Chrominanz-Makroblöcke durch Multiplikation mit einem konstanten Faktor gemäß SAD$_{Threshold, QP, chrominance}$ = C * SAD$_{Threshold, QP, luminance}$ berechnet wird.

5. Verfahren nach Anspruch 4, bei dem der konstante Faktor 0,7 $\pm$ 10% ist.

6. Verfahren nach einem der vorhergehenden Ansprüche, bei dem getrennte Tabellen von Schwellwerten für geringe, mittlere und hohe Bewegungssequenzen verwendet werden.

7. Verfahren nach einem der vorhergehenden Ansprüche, bei dem eine neue Tabelle von Schwellwerten für jede GOP ausgewählt wird.

8. Verfahren zum Kodieren von Bildern auf Makroblock-Ebene, bei dem eine Quantisierung mit einem vorbestimmten Quantisierungs-Parameter verwendet wird, umfassend die Schritte:

   - Bestimmen entsprechender Schwellwerte (SAD$_{Threshold, QP}$) für verschiedene Quantisierungs-Parameter gemäß einem der Verfahren der Ansprüche 1 bis 7;
   - Berechnen eines Differenzwertes (SAD) für jeden Makroblock eines aktuellen Bildes durch Vergleichen mit einem entsprechenden Makroblock eines vorhergehenden Bildes;
   - Bestimmen eines zu verwendenden Quantisierungs-Parameters (QP);
   - Vergleichen des Differenzwertes (SAD) mit dem Schwellwert (SAD$_{Threshold, QP}$), der dem bestimmten Quantisierungs-Parameter (QP) entspricht; und
   - Überspringen von Bewegungsabschätzung und Kodieren des Makroblocks, wenn der Differenzwert (SAD) unter dem Schwellwert (SAD$_{Threshold, QP}$) für den bestimmten Quantisierungs-Parameter liegt.

9. Vorrichtung zum Bestimmen eines Schwellwertes, der bei der Video-Kodierung für die Entscheidung geeignet ist, ob Bewegungsabschätzung, DCT und Quantisierung auf Makroblock-Ebene übersprungen werden können, umfassend:

- Mittel zum Bestimmen eines Quantisierungs-Parameters;
- Mittel zum Quantisieren und inversen Quantisieren ($\lambda 1$) eines Bildes ($f_{x, cur}$) auf Makroblock-Ebene, wobei der bestimmte Quantisierungs-Parameter verwendet wird und ein rekonstruiertes Bild ($f_{x, rec}$) erhalten wird;
- Mittel zum Berechnen einer Differenz (SAD) zwischen dem Bild ($f_{x, cur}$) und dem rekonstruierten Bild ($f_{x, rec}$);
- Mittel zum Berechnen der mittleren ($m_{SAD}$) und der Standardabweichung ($\sigma_{SAD}$) der Differenz zwischen dem aktuellen und dem rekonstruierten Bild;
- Mittel zum Berechnen eines Schwellwertes ($SAD_{Threshold, QP}$) unter Verwendung der mittleren ($m_{SAD}$) und der Standardabweichung ($\sigma_{SAD}$), um ein statistisches Vertrauensintervall zu bestimmen; und
- Mittel zum Speichern des dem Quantisierungs-Parameter zugeordneten Schwellwertes ($SAD_{Threshold, QP}$).

**10.** Vorrichtung zum Kodieren von Bildern auf Makroblock-Ebene, bei der eine Quantisierung mit einem vordefinierten Quantisierungs-Parameter verwendet wird, umfassend:

- Mittel, um für verschiedene Quantisierungs-Parameter entsprechende Schwellwerte ($SAD_{Threshold, QP}$) gemäß einem der Verfahren der Ansprüche 1 bis 7 zu bestimmen;
- Mittel, um für jeden Makroblock eines aktuellen Bildes einen Differenzwert (SAD) durch Vergleich mit einem entsprechenden Makroblock eines vorhergehenden Bildes zu berechnen;
- Mittel zum Bestimmen eines zu verwendenden Quantisierungs-Parameters (QP);
- Mittel zum Vergleichen des Differenzwertes (SAD) mit dem Schwellwert ($SAD_{Threshold, QP}$), der dem bestimmten Quantisierungs-Parameter (QP) entspricht; und
- Mittel zum Überspringen der Bewegungsabschätzung und des Kodierens des Makroblocks, wenn der Differenzwert (SAD) unter dem Schwellwert ($SAD_{Threshold, QP}$) für den bestimmten Quantisierungs-Parameter liegt.

**Revendications**

**1.** Procédé permettant de déterminer une valeur limite adaptable afin de décider dans un codage vidéo si une estimation de mouvement, une TCD et une quantification peuvent être sautées sur un niveau de macrobloc, comprenant les étapes consistant à

- déterminer un paramètre de quantification ;
- réaliser une quantification et une quantification inverse ($\lambda 1$) d'une image ($f_{x, cur}$) sur un niveau de macrobloc, où le paramètre de quantification déterminé est utilisé et une image reconstruite ($f_{x, rec}$) est obtenue ;
- calculer une différence (SAD) entre l'image ($f_{x, cur}$) et l'image reconstruite ($f_{x, rec}$) ;
- calculer le moyen ($m_{SAD}$) et une déviation standard ($\sigma_{SAD}$) de différences entre l'image réelle et reconstruite ;
- calculer une valeur limite ($SAD_{Threshold, QP}$) en utilisant le moyen ($m_{SAD}$) et la déviation standard ($\sigma_{SAD}$) pour déterminer un intervalle de confiance statistique, et
- stocker la valeur limite ($SAD_{Threshold, QP}$) associée au paramètre de quantification.

**2.** Procédé selon la revendication 1, dans lequel l'intervalle de confiance statistique est déterminé selon $SAD_{Threshold, QP} = m_{SAD} + 3\sigma_{SAD}$.

**3.** Méthode selon la revendication 1 ou 2, dans laquelle le moyen ($m_{SAD}$) et la déviation standard ($\sigma_{SAD}$) d'une image sont calculés à partir du moyen ($m_o$) et d'une déviation standard ($\sigma_o$) des macroblocs d'une image selon $m_{SAD} = n * m_o$ et $\sigma_{SAD} = n * \sigma_o$, où n est le nombre de macroblocs par image.

**4.** Procédé selon une quelconque des revendications 1 à 3, dans lequel la valeur limite est valide pour des macroblocs de luminance, et dans lequel une valeur limite pour des macroblocs de chrominance est calculée par une multiplication avec un facteur constant selon $SAD_{Threshold, QP, chrominance} = C * SAD_{Threshold, QP, luminance}$

**5.** Procédé selon la revendication 4, dans lequel le facteur constant est $0,7 \pm 10\%$.

**6.** Procédé selon une quelconque des revendications précédentes, dans lequel des tableaux séparés de valeurs limites sont utilisés pour des séquences à faible mouvement, à mouvement moyen et à mouvement élevé.

**7.** Procédé selon une quelconque des revendications précédentes, dans lequel un nouveau tableau de valeurs limites est sélectionné pour chaque GOP.

**8.** Procédé permettant de coder des images sur un niveau de macrobloc, dans lequel la quantification à l'aide d'un paramètre de quantification prédéfini est utilisée, comprenant les étapes consistant à

- déterminer pour différents paramètres de quantification des valeurs limites ($SAD_{Threshold, QP}$) respectives selon un quelconque des procédés des revendications 1 à 7 ;
- calculer pour chaque macrobloc d'une image réelle une valeur de différence (SAD) en la comparant à un macrobloc correspondant d'une image précédente ;
- déterminer un paramètre de quantification (QP) à utiliser ;
- comparer la valeur de différence (SAD) à la valeur limite ($SAD_{Threshold, QP}$) correspondant au paramètre de quantification déterminé (QP) ; et
- sauter une estimation de mouvement et coder le macrobloc si ladite valeur de différence (SAD) est inférieure à la valeur limite ($SAD_{Threshold, QP}$) pour le paramètre de quantification déterminé.

**9.** Appareil permettant de déterminer une valeur limite adaptable afin de décider dans un codage vidéo si une estimation de mouvement, une TCD et une quantification peuvent être sautées sur un niveau de macrobloc, comprenant

- un moyen pour déterminer un paramètre de quantification ;
- un moyen pour réaliser une quantification et une quantification inverse ($\lambda 1$) d'une image ($f_{x, cur}$) sur un niveau de macrobloc, où le paramètre de quantification déterminé est utilisé et une image reconstruite ($f_{x, rec}$) est obtenue ;
- un moyen pour calculer une différence (SAD) entre l'image ($f_{x, cur}$) et l'image reconstruite ($f_{x, rec}$) ;
- un moyen pour calculer le moyen ($m_{SAD}$) et une déviation standard ($\sigma_{SAD}$) de différences entre l'image réelle et reconstruite ;
- un moyen pour calculer une valeur limite ($SAD_{Threshold, QP}$) en utilisant le moyen ($m_{SAD}$) et une déviation standard ($\sigma_{SAD}$) pour déterminer un intervalle de confiance statistique, et
- un moyen pour stocker la valeur limite ($SAD_{Threshold, QP}$) associée au paramètre de quantification.

**10.** Appareil permettant de coder des images sur un niveau de macrobloc, dans lequel la quantification à l'aide d'un paramètre de quantification prédéfini est utilisée, comprenant

- un moyen pour déterminer, pour différents paramètres de quantification, des valeurs limites $SAD_{Threshold, QP}$ respectives selon un quelconque des procédés des revendications 1 à 7 ;
- un moyen pour calculer, pour chaque macrobloc d'une image réelle, une valeur de différence (SAD) en la comparant à un macrobloc correspondant d'une image précédente ;
- un moyen pour déterminer un paramètre de quantification (QP) à utiliser ;
- un moyen pour comparer la valeur de différence (SAD) à la valeur limite ($SAD_{Threshold, QP}$) correspondant au paramètre de quantification déterminé (QP) ; et
- un moyen pour sauter une estimation de mouvement et coder le macrobloc si ladite valeur de différence (SAD) est inférieure à la valeur limite ($SAD_{Threshold, QP}$) pour le paramètre de quantification déterminé.

**Fig.1**

**Fig.2**

Fig.3

Fig.4

**Fig.5**

**Fig.6**